# FASCICULE DE BREVET EUROPEEN

(11) **EP 3 215 369 B1**
(45) Date de publication et mention de la délivrance du brevet: **28.08.2019**
(21) Numéro de dépôt: 15804878.5
(22) Date de dépôt: 03.11.2015
(51) Int. Cl.: B42D 25/351, B42D 25/378, B42D 25/41, B42D 25/45, B41M 3/14, B41M 5/28, B42D 25/21

(54) **PROCÉDÉ DE FABRICATION D'UN SUPPORT DE DONNÉES ET SUPPORT DE DONNÉES AINSI OBTENU**
VERFAHREN ZUR HERSTELLUNG EINES DATENTRÄGERS UND DADURCH ERHALTENER DATENTRÄGER
PROCESS FOR MANUFACTURING A DATA SUPPORT AND DATA SUPPORT OBTAINED THEREWITH

(30) Priorité: 04.11.2014 FR 1460646
(43) Date de publication de la demande: 13.09.2017
(73) Titulaire: FASVER, 34670 Baillargues (FR)
(72) Inventeur: PHILIPPE, Eric, 13430 Eyguieres (FR); BES, Laurence, 34830 Jacou (FR)
(74) Mandataire: Gevers & Orès
(86) Numéro de dépôt international: PCT/FR2015/052969
(87) Numéro de publication internationale: WO 2016/071627

(56) Documents cités:
- EP-A2- 1 066 978
- DE-A1-102008 011 299
- US-A1- 2012 263 893

## Description

L'invention concerne un procédé de fabrication d'un support de données multicouche et un support de données multicouche.

L'invention concerne plus particulièrement un support de données multicouche visant à protéger une portion de surface d'un document officiel portant des inscriptions. L'invention concerne également un document officiel protégé à l'aide d'un tel support de données multicouche.

Dans tout le texte, on entend par « lumière visible », toute lumière dont la composition spectrale est située dans le spectre visible, dans les longueurs d'onde comprises entre 0,4 µm et 0,8 µm.

Dans tout le texte, on entend par « image semi-transparente » toute image qui, lorsqu'elle recouvre un document ou un produit permet de distinguer -notamment de lire- par visualisation normale (sans instrument spécifique) à travers cette image, au moins sous éclairage en lumière visible, des caractères, des marques ou des motifs sous-jacents du document. En particulier, une image semi-transparente ne masque pas totalement, au moins sous éclairage en lumière visible, les caractères, marques et/ou motifs sous-jacents du document.

Dans tout le texte, on désigne par « inscription » ou « inscription à lire » tout signe ou motif réalisé sur une couche d'un document, pouvant être lu par l'homme au moins sous certaines conditions (notamment sous éclairage normal en lumière visible ; et/ou sous éclairage spécifique ; et/ou après activation d'un dispositif électronique (écran) ou autre...). Il peut s'agir de mentions variables de personnalisation d'un document officiel ou de mentions communes et/ou de sécurité ; de textes (écriture manuelle ou caractères imprimés) ; de codes (ASCII, codes universels à lecture optoélectronique tels que codes à barres...) ; d'images ou photographies...

On connait de nombreux dispositifs et procédés de protection sécuritaire de documents officiels (passeports, visas, cartes d'identité, permis de conduire, cartes grises, cartes bancaires, chèques bancaires, diplômes, certificats, titres de transport, cartes de contrôle d'accès, badges, étiquettes, actes légaux, contrats, registres légaux, plans cadastraux, documents fiduciaires, billets de banque, plans de fabrication ou autres plans...) portant des inscriptions, notamment des inscriptions à lire telles que des mentions variables (nom, prénom, adresse, photo, signature... d'un titulaire ou des parties...) et/ou des mentions communes (motifs sécuritaires, matrices, cadres, noms de champs, sceaux, hologrammes, signatures, valeurs,...) à protéger contre les tentatives de falsification et/ou les contrefaçons et/ou pour l'authentification et/ou pour garantir leur intégrité (c'est-à-dire le fait qu'elles n'ont pas été altérées ou modifiées).

US 2006/0145469 décrit un document, en particulier un chèque, protégé contre la falsification, comprenant une première marque formée à l'aide d'une encre procurant un effet nacré et une deuxième marque formée à l'aide d'une encre thermochromique. La marque formée à l'aide d'une encre thermochromique est opaque et n'est appliquée que sur une portion limitée du document. La marque formée à l'aide d'une encre thermochromique est visible à la température ambiante et disparait lorsque sa température est augmentée, par exemple par application d'un pouce sur ladite marque, la marque réapparaissant lors du retour à la température après retrait de la source de chaleur.

On connait également de WO 2009/106242 et CA 2 716 892 un dispositif sécuritaire comprenant au moins une couche d'encre thermochromique recouvrant et cachant deux motifs, le premier motif devenant visible lorsqu'on soumet l'encre thermochromique à une première augmentation de température et le deuxième motif devenant visible lorsqu'on soumet l'encre thermochromique à une deuxième augmentation de température différente de la première. La couche d'encre thermochromique forme un motif opaque de taille limitée sur le document à protéger.

EP 1 066 978 A2 décrit un article comprenant une première encre thermochromique et une deuxième encre thermochromique.

On connait également de EP 2 499 001 et US 2012/0263893 A1, un support de données multicouche comprenant une couche de marquage sensible au rayonnement hors de la zone spectrale visible et comprenant un marquage caché, et une couche de recouvrement thermochromique, disposée au-dessus de la couche de marquage, opaque en-dessous de sa température de virage de façon à masquer ledit marquage caché et translucide ou transparente au-dessus de sa température de virage de façon à rendre visible ledit marquage caché. Pour ce faire, la couche de recouvrement thermochromique selon EP 2 499 001 est en pratique nécessairement noire ou à tout le moins très foncée. Le procédé de préparation d'un support de données multicouche selon EP 2 499 001 limite également le choix des pigments thermochromiques compatibles avec celui-ci ainsi que le choix du rayonnement laser qui peut être utilisé. US 2012/0263893 A1 est l'état de la technique le plus proche pour l'invention.

Dans ces dispositifs connus, les motifs formés à base d'encre thermochromique sont opaques à une température inférieure à la température d'activation des thermochromes et deviennent incolores et transparents à partir et au-delà de la température d'activation des thermochromes. Les motifs formés à base d'encre thermochromique ne sont donc transparents que dans leur état activé et ne permettent pas de laisser visibles des informations imprimées sur le document à protéger dans leur état non activé.

En outre, les images thermochromiques de tels dispositifs connus sont limitées en termes de finesse d'impression et de richesse des couleurs.

L'invention vise à pallier les inconvénients des différents dispositifs de l'état de la technique et à proposer un procédé de fabrication d'un support de données multicouche et un support de données multicouche permettant de laisser visibles de façon permanente des inscriptions à protéger portées par - notamment figurant sur- ledit support de données ou un document officiel.

L'invention vise également à proposer un procédé de fabrication d'un support de données multicouche et un support de données multicouche permettant la réalisation d'un marquage personnalisé lors d'une étape finale du procédé de fabrication dudit support de données multicouche.

L'invention vise également à proposer un procédé de fabrication d'un support de données multicouche et un support de données multicouche procurant une sécurité de premier niveau qui soient authentifiables par visualisation normale, sans nécessiter d'instrument spécifique tel qu'une lampe UV par exemple.

L'invention vise également à proposer un procédé de fabrication d'un support de données multicouche et un support de données multicouche permettant une authentification rapide d'un document, en particulier d'un document officiel, et sans nécessiter une inclinaison particulière ou une déformation du document.

L'invention vise à proposer un support de données multicouche durable, et en particulier dont la durée de vie est supérieure à 1 an et pouvant aller jusqu'à 10 ans ou plus.

L'invention vise également à proposer un support de données multicouche pouvant se présenter sous la forme d'une carte, notamment d'une carte rigide en polycarbonate.

Pour ce faire, l'invention concerne un procédé de fabrication d'un support de données multicouche tel que défini à la revendication 1.

L'invention s'étend à un support de données multicouche susceptible d'être obtenu par un procédé selon l'invention. L'invention s'étend donc à un support de données multicouche tel que défini à la revendication 12.

L'invention s'étend également à un document officiel comprenant au moins un tel support de données multicouche.

De façon totalement inattendue, les inventeurs ont observé qu'il est possible d'imprimer une image à l'aide d'au moins une composition d'impression comprenant des pigments thermochromiques, et d'obtenir une image imprimée semi-transparente et colorée (présentant un motif visible semi-transparent) dans un état non activé des pigments thermochromiques, à au moins une première température, et totalement transparente et incolore (sans motif visible semi-transparent) dans un état activé des pigments thermochromiques, à au moins une deuxième température, différente de la première température. On obtient ainsi un support de données multicouche adapté pour pouvoir recouvrir des inscriptions (notamment des marques obtenues par marquage à l'aide d'un rayonnement de marquage tel qu'un laser), par exemple des inscriptions figurant sur un document officiel, sans empêcher leur visibilité et/ou leur lecture, au moins sous éclairage en lumière visible.

Un procédé et un support de données multicouche selon l'invention permettent donc d'améliorer la sécurité des documents officiels puisqu'ils permettent ainsi de protéger de plus grandes portions de surface de ceux-ci et en particulier les portions de surface portant des inscriptions à lire dont il est souhaitable de toujours permettre la lecture (à l'état activé comme à l'état non activé).

En outre, les inventeurs ont constaté, de façon inattendue, qu'il est possible de réaliser un marquage à l'aide d'un rayonnement électromagnétique de marquage dans une couche sous-jacente à ladite couche de sécurité, au travers d'une telle image imprimée semi-transparente. Ceci permet d'augmenter encore le niveau de sécurité des documents officiels puisqu'une telle marque est disposée au sein du support de données multicouche et non directement en surface de celui-ci. D'autre part, la marque ainsi formée est toujours visible au travers de l'image imprimée semi-transparente thermochromique (à l'état activé comme à l'état non activé des pigments thermochromiques), au moins sous éclairage en lumière visible. Un procédé selon l'invention permet d'autre part de pouvoir ajouter au moins un élément de sécurité supplémentaire (ladite marque formée à l'aide d'un rayonnement électromagnétique de marquage) à un stade avancé du procédé de fabrication d'un document officiel.

Il est à noter que ladite marque formée à l'aide d'un rayonnement électromagnétique de marquage peut être formée de mentions variables de personnalisation d'un document officiel ou de mentions communes et/ou de sécurité, de textes ou caractères, d'images ou de photographies... Chaque marque peut s'étendre sur au moins une portion de surface de ladite couche de marquage et dudit support de données.

Dans certains modes de réalisation possibles de l'invention, ladite couche de sécurité transparente peut être une couche faisant partie d'un document officiel, notamment une couche extérieure de celui-ci, par exemple lorsque le document officiel est une carte en matière synthétique (par exemple une carte formée de plusieurs couches de polycarbonate superposées et laminées). Dans ces modes de réalisation ladite image imprimée semi-transparente peut être imprimée sur une telle couche extérieure du document officiel avant lamination à chaud et sous pression des différentes couches constitutives du document officiel, ou au contraire après une telle lamination. Ladite image imprimée semi-transparente est imprimée de façon à recouvrir des inscriptions à protéger portées par une couche sous-jacente du document.

En effet, les inventeurs ont constaté qu'une image imprimée semi-transparente selon l'invention, comprenant au moins un pigment thermochromique, est compatible avec des matériaux tels que le polycarbonate est permet de préparer des cartes, et en particulier des cartes comprenant au moins une couche comprenant du polycarbonate.

En particulier, avantageusement et selon l'invention, ledit rayonnement électromagnétique de marquage est un rayonnement laser. Il peut s'agir de tout rayonnement laser de marquage choisi parmi les rayonnements laser infrarouges (IR), les rayonnements laser visibles et les rayonnements laser ultraviolets (UV). La fréquence et la puissance de pompage du laser sont adaptées pour permettre la réalisation de la marque voulue dans la couche de marquage.

Avantageusement et selon l'invention, la couche de marquage est choisie de façon à être sensible au rayonnement électromagnétique de marquage à utiliser. En particulier, avantageusement et selon l'invention, la couche de marquage est formée d'au moins un matériau adapté pour permettre la formation d'au moins une marque (se présentant sous la forme d'un motif ou d'une image en relief et/ou creux et/ou présentant une couleur ou une nuance de couleur différente distincte de celle de la couche de marquage avant la réalisation de ladite marque). En particulier, avantageusement et selon l'invention, la couche de marquage est formée d'au moins un matériau sensible au rayonnement électromagnétique de marquage choisi parmi les matériaux métalliques, les matériaux polymères, leurs composites et leurs mélanges. En particulier, avantageusement et selon l'invention, la couche de marquage est formée d'au moins un matériau polymère comprenant des additifs tels que du carbone ou des oxydes métalliques permettant de rendre ledit matériau sensible au rayonnement électromagnétique de marquage. De tels additifs permettant de sensibiliser une couche de marquage au rayonnement électromagnétique de marquage sont par exemple choisis parmi le noir de carbone, le graphite, le dioxyde de titane (TiO₂), Sn(Sb)O₂, l'anthracène ou encore les colorants absorbants dans le domaine spectral des infrarouges tels que les perylenes/rylenes, le pentaerythritol, le phosphate de cuivre hydroxylés, le disulfure de molybdène ou l'oxychlorure de bismuth. Il est bien sûr également possible d'utiliser une couche de marquage formée d'au moins un matériau polymère sensible au rayonnement électromagnétique de marquage (de manière intrinsèque, sans nécessiter d'additifs de sensibilisation).

En particulier, avantageusement et selon l'invention, on choisit la couche de marquage et le rayonnement électromagnétique de marquage, notamment le rayonnement laser, de façon à ce que ledit rayonnement électromagnétique de marquage permette la formation d'une marque telle que définie précédemment dans la couche de marquage. Il sera par exemple nécessaire d'utiliser un laser de marquage présentant un rayonnement dans le domaine spectral des infrarouges dans le cas où la couche de marquage ne comprend que des additifs absorbants dans le domaine spectral des infrarouges.

Avantageusement et selon l'invention, ladite couche de marquage s'étend selon un format similaire ou de taille inférieure à celui de la couche de sécurité et/ou du support de données multicouche.

Dans les modes de réalisation dans lesquels le support de données est une carte formée de plusieurs couches de polycarbonate superposées et laminées, l'étape de marquage peut être réalisée avant lamination à chaud et sous pression des différentes couches constitutives du document officiel, ou au contraire après une telle lamination, le marquage étant réalisé au travers de l'image imprimée semi-transparente de la couche de sécurité.

En particulier, avantageusement et selon l'invention, la première température est inférieure à la deuxième température. De cette façon, une augmentation de température permet de passer de l'état non activé transparent et coloré, à l'état activé transparent et incolore.

En particulier, avantageusement et selon l'invention, on choisit les pigments thermochromiques de façon à ce qu'ils présentent au moins une température d'activation comprise entre 20°C et 50°C, notamment entre 25°C et 45°C.

En particulier, avantageusement et selon l'invention, on choisit les pigments thermochromiques de façon à ce qu'ils se trouvent à l'état transparent et coloré (état non activé) à température ambiante (en particulier à une température comprise entre 15°C et 35°C).

On peut ainsi par exemple passer de l'état non activé à l'état activé par un échauffement obtenu par un simple contact d'un doigt ou de la main sur la surface d'une image imprimée selon l'invention, et éventuellement un léger frottement des doigts à la surface d'une image imprimée selon l'invention ou encore à l'aide d'un outil présentant un embout en matériau élastomère (de type caoutchouc ou semblable à une gomme).

La couche de sécurité transparente peut être formée de l'image imprimée elle-même à l'aide de ladite au moins une composition d'impression ou comprendre au moins une couche formée de tout matériau adapté pour pouvoir être imprimé, sur laquelle on imprime ladite image semi-transparente. Avantageusement et selon l'invention, la couche de sécurité transparente -notamment le support de données multicouche transparent- comprend au moins un matériau choisi parmi les matériaux cellulosiques et les matériaux polymères. Avantageusement et selon l'invention, on utilise une couche de sécurité comprenant au moins une couche formée d'au moins un matériau choisi dans le groupe formé des matériaux thermoplastiques transparents et des papiers synthétiques transparents. En particulier, avantageusement et selon l'invention, on utilise une couche de sécurité comprenant au moins une couche formée d'au moins un matériau choisi dans le groupe formé des polycarbonates transparents, des polyesters transparents, du PVC transparent, des vernis en polyuréthane et des vernis vinyliques (ou des vernis de type polyuréthane ou vinylique).

En particulier, avantageusement et selon l'invention, le support de données multicouche est porté par un film support disposé sur au moins une portion de la surface d'une couche extérieure dudit support de données multicouche. En particulier, dans les modes de réalisation où le support de données multicouche est porté par un film support, le support de données multicouche selon l'invention est avantageusement un dispositif de sécurité formant un dispositif de transfert -notamment un dispositif de transfert à chaud-. Ainsi, avantageusement et selon l'invention, le film support portant le support de données multicouche est adapté pour permettre le transfert, notamment le transfert à chaud, du support de données multicouche sur ladite portion de surface, par lamination du dispositif de sécurité sur une portion de surface d'un document officiel. Avantageusement et selon l'invention, le support de données multicouche est transparent et est formé d'au moins un matériau polymère choisi parmi les polycarbonates, les polychlorures de vinyle (PVC), les polyéthylènes téréphtalate (PET), les polyéthylènes téréphtalate glycolisés (PETG), leurs copolymères et leurs mélanges.

Le film support portant ledit support de données multicouche peut être formé de tout matériau rigide ou souple, multicouches ou non, et être formé d'au moins un matériau choisi parmi les matériaux cellulosiques et les matériaux polymères. Avantageusement et selon l'invention, le film support est formé d'au moins un matériau cellulosique choisi parmi les papiers, notamment les papiers de sécurité. Avantageusement et selon l'invention, le film support est formé d'au moins un matériau polymère choisi parmi les polycarbonates, les polychlorures de vinyle (PVC), les polyéthylènes téréphtalate (PET), les polyéthylènes téréphtalate glycolisés (PETG), leurs copolymères et leurs mélanges.

L'ensemble formé par ledit film support et ledit support de données multicouche peut par exemple être un film transfert commercialisé par la société FASVER Baillargues (France) sous la référence Fasprotek™ ou Passprotek™, ou Fasfilm™ ou encore Transfilm™, et/ou conformes à EP-0271941 et US-5232527, le support de données multicouche comprenant au moins une image imprimée semi-transparente selon l'invention.

En outre, avantageusement et selon l'invention, ladite image semi-transparente est une image colorée. L'image colorée peut par exemple comprendre une seule couleur (image monochromatique) représentant un motif représentant un objet, des caractères, des inscriptions ou encore une photo, ou même simplement un aplat continu uni d'une couleur sur toute la surface de la couche de sécurité transparente.

En particulier, avantageusement et selon l'invention, ladite image semi-transparente est une image polychromatique.

Avantageusement et selon l'invention, ladite image semi-transparente est disposée au moins pour partie en regard de ladite couche de marquage.

Avantageusement et selon l'invention, ladite image semi-transparente est imprimée sur ledit support de données multicouche transparent, de préférence sur une face ne formant pas une face extérieure du support de données multicouche, ni du document officiel. L'image semi-transparente peut être imprimée à l'aide de toute technique d'impression, par exemple par sérigraphie, jet d'encre ou encore par flexographie. En particulier avantageusement et selon l'invention, ladite image semi-transparente peut être imprimée à l'aide d'une technique d'impression permettant la réalisation de motifs très variés, notamment des motifs fins et complexes. Il est notamment possible d'obtenir des graphismes ou textes de largeur de trait inférieure à 200 µm, notamment largeur de trait inférieure à 100 µm. Ainsi, avantageusement et selon l'invention, ladite image semi-transparente est imprimée avec une linéature supérieure à 80 lignes par pouces, et en particulier avec une linéature supérieure à 120 lignes par pouces.

En particulier, avantageusement et selon l'invention, ladite image semi-transparente est imprimée par impression sérigraphique, selon la technique de la quadrichromie. En effet, les inventeurs ont constaté de façon tout à fait surprenante qu'il est possible d'imprimer une composition d'impression comprenant des pigments thermochromiques selon cette technique. Il est ainsi possible de préparer une grande variété d'images semi-transparentes en termes de formes, de taille et de couleurs.

La technique d'impression quadrichromique permet donc de reproduire un large spectre colorimétrique à partir des couleurs suivantes : cyan, magenta et jaune et de noir. Ainsi, avantageusement et selon l'invention, ladite image semi-transparente est imprimée par impressions successives :
- d'une première composition d'impression comprenant des pigments thermochromiques de couleur cyan,
- d'une deuxième composition d'impression comprenant des pigments thermochromiques de couleur magenta,
- d'une troisième composition d'impression comprenant des pigments thermochromiques de couleur jaune, et
- d'une quatrième composition d'impression comprenant des pigments thermochromiques de couleur noire.

L'image imprimée semi-transparente comprend au moins un liant transparent adapté pour ne pas gêner la visualisation des inscriptions portées par le document officiel à protéger. Avantageusement et selon l'invention, on choisit ledit liant transparent dans le groupe formé des liants polymériques transparents.

Avantageusement et selon l'invention, le liant transparent est choisi dans le groupe formé des résines thermoplastiques transparentes. En particulier, avantageusement et selon l'invention, on choisit ledit liant transparent dans le groupe formé des matériaux polymères tels que les polycarbonates, les polyesters, les polyacrylates, les polyacryliques, notamment les polyméthacrylates, les polyuréthanes, les polyéthers, les polycaprolactones, leurs mélanges et leurs copolymères. Le liant est par exemple un copolymère de méthacrylate de méthyle tel qu'une résine commercialisée par DOW CHEMICAL (Midland, USA) sous la référence Paraloid B®.

Avantageusement et selon l'invention, ladite image semi-transparente est imprimée à l'aide d'au moins une composition d'impression (encre) comprenant des pigments thermochromiques et au moins un liant transparent.

Avantageusement et selon l'invention, ladite image semi-transparente est imprimée à l'aide d'au moins une composition d'impression comprenant des pigments thermochromiques choisis dans le groupe formé des capsules (micro-capsules) comprenant au moins un leuco-colorant (également appelé « développeur de couleur »), au moins un acide faible et au moins un liquide organique (à titre de solvant). Les pigments thermochromiques comprennent donc, à l'intérieur de chaque micro-capsule, une composition colorante comprenant au moins un leuco-colorant, au moins un acide faible et au moins un liquide organique. De tels pigments thermochromiques sont connus et sont par exemple commercialisés par la société Polychrom CO LTD (Ansan city, Corée). Ils présentent par exemple une taille moyenne comprise entre 1 µm et 100 µm, notamment entre 2 µm et 60 µm.

La proportion de pigments thermochromiques dans la composition d'impression est choisie de façon à obtenir une image semi-transparente, et donc à permettre la visualisation des inscriptions imprimées sur ledit document officiel à travers l'image semi-transparente, au moins sous éclairage en lumière visible. Avantageusement et selon l'invention, ladite image semi-transparente est imprimée à l'aide d'au moins une composition d'impression comprenant entre 9 % et 22 % en poids de pigments thermochromiques.

La couleur cyan peut être obtenue par un mélange d'un colorant vert et d'un colorant bleu, par exemple le chlorure de 4-[4,4'-bis(diméthylamino)benzhydrylidène]cyclohexa-2,5-dien-1-ilidène]diméthyl-ammonium (appelé « *Crystal Violet Lactone* ») pour la couleur bleu et le 3-diéthylamino-7-dibenzylaminofluoran pour la couleur verte.

La couleur magenta peut être obtenue par un mélange d'un colorant rouge et d'un colorant bleu.

Pour la couleur rouge plusieurs molécules peuvent être utilisées comme le 3,3-bis(1-octyl-2-méthyl-indol-3-yl)phthalide, le 6'éthyl(p-tolyl)aminol-2'-méthylspiro[isobenzofurane-1(3H), le 9-[9H]xanthène-3-one, le spiro[12H-benzo[a]xanthène-12 ou encore le 1'(3'H)-isobenzofurane]-3'-one, 9-[éthyl(3-méthylbutyl)amino].

Pour la couleur jaune on peut par exemple utiliser la benzénamine, N,N-diméthyl-4-[2-[2-(octyloxy)phényl]-6-phényl-4-pyridinyl].

L'acide faible est par exemple choisi parmi les acides de type bisphénol A ou bisphénol S.

Le solvant contenu dans les micro-capsules de pigments thermochromiques est en général un solvant polaire comme un alcool ou un ester.

L'enveloppe polymérique de chaque micro-capsule est par exemple formée d'un polymère d'encapsulation tel que la mélamine formaldéhyde.

La composition d'impression peut en outre comprendre au moins un solvant, par exemple un solvant aqueux ou organique. Avantageusement et selon l'invention, le solvant est par exemple l'éther de dipropylène glycol monométhylique et/ou le 3-éthoxypropanoate d'éthyle.

Avantageusement et selon l'invention, on choisit un solvant adapté pour permettre l'impression d'une image semi-transparente d'un dispositif selon l'invention. En particulier, avantageusement et selon l'invention, on choisit ledit solvant de façon à ce qu'il soit compatible avec les pigments thermochromiques de la composition d'impression utilisée, c'est-à-dire qui ne soit pas susceptible d'endommager les micro-capsules polymériques desdits pigments thermochromiques ni de perturber la composition colorante comprise dans les micro-capsules desdits pigments thermochromiques (système leuco-colorant et acide faible).

Avantageusement et selon l'invention, chaque composition d'impression comprend ainsi :
- entre 9 % et 22 % en poids de capsules thermochromiques,
- entre 30 % et 45 % en poids de liant transparent,
- entre 25 % et 50 % en poids de solvant.

Avantageusement et selon l'invention, on applique ledit support de données multicouche sur une portion de surface d'un document officiel comprenant des inscriptions de façon à ce que l'image semi-transparente recouvre au moins en partie lesdites inscriptions. On obtient alors des dispositifs de protection de grande taille et transparents permettant de visualiser les inscriptions imprimées sur le document officiel.

Avantageusement et selon l'invention, ladite image semi-transparente s'étend selon un format similaire à celui du support de données multicouche transparent. En effet, les supports de données multicouches de grande taille sont plus difficiles à falsifier, et en particulier à reproduire. En outre les supports de données multicouches de grande taille sont également plus difficiles à retirer et à réutiliser sur un autre document. Un procédé et un support de données multicouche selon l'invention permettent donc de préparer des dispositifs de protection de grande taille sans empêcher la visualisation des inscriptions à lire imprimées sur le document officiel.

D'autre part, il est possible d'imprimer d'autres types d'encres sécuritaires à la surface du document officiel et/ou sur et/ou dans le support de données multicouche ou d'ajouter tout autre dispositif de protection sécuritaire de façon à renforcer encore sa protection. Il peut par exemple s'agir d'au moins une inscription formée d'une composition d'encre de sécurité choisie dans le groupe constitué des encres photoluminescentes -notamment sous éclairage ultraviolet-, des encres fluorescentes, des encres photochromiques, des encres iridescentes, des encres à pigments interférentiels, des encres à colorant soluble, et des encres à liant soluble. Avantageusement et selon l'invention le document officiel et/ou le support de données multicouche peuvent également comprendre au moins un marquage de sécurité, notamment choisie dans le groupe des marques holographiques et des marques métallisées (c'est-à-dire formées d'au moins une impression d'une encre produisant un effet métallique et/ou incorporant des particules métalliques et/ou d'une couche métallique).

Il est possible d'appliquer une couche de vernis de protection supplémentaire sur la surface libre de la dernière couche de composition d'impression thermochromique de la couche de sécurité transparente, de façon à protéger l'image semi-transparente du support de données multicouche ainsi obtenu. Toutefois, l'application d'un tel vernis de protection n'est pas indispensable.

Il est également possible d'appliquer une couche d'adhésif au-dessus du support de données multicouche transparent (sur la surface libre de la dernière couche de composition d'impression thermochromique ou encore sur l'éventuelle couche de vernis de protection), de façon à permettre le transfert du dispositif de protection et la fixation de celui-ci sur un document officiel à protéger.

En outre, bien qu'il ne soit pas indispensable d'ajouter d'additifs anti-UV, d'additifs de type HALS (« *Hindered Amine Light Stabilizers* ») ou encore d'antioxydants dans la composition d'impression thermochromique, il est possible de le faire, ceux-ci étant toutefois choisis pour être compatibles avec une utilisation dans la composition d'impression thermochromique.

Par ailleurs, pour améliorer la compatibilité entre ladite au moins une composition d'impression thermochromique et le support de données multicouche transparent, il est possible de choisir le liant et/ou support de données multicouche transparent de façon à ce qu'ils soient principalement formés d'au moins un même matériau polymère.

L'invention s'étend à un document officiel comprenant au moins un support de données selon l'invention.

Un document officiel selon l'invention peut notamment être choisi dans le groupe formé des passeports, des feuilles de passeport, des fiches douanières, des visas, des cartes d'identité, des permis de conduire, des cartes d'immatriculation de véhicules (cartes grises), des cartes bancaires, des cartes de fidélité, des chèques bancaires, des diplômes, des certificats, des titres de transport, des cartes de contrôle d'accès, des badges, des étiquettes, des actes légaux, des contrats, des registres légaux, des plans cadastraux, des documents fiduciaires, des billets de banque, des emballages et des plans de fabrication.

L'invention concerne aussi un procédé et un support de données multicouche ainsi qu'un document officiel caractérisés en combinaison par tout ou partie des caractéristiques mentionnées ci-dessus ou ci-après.

D'autres buts, caractéristiques et avantages de l'invention apparaissent à la lecture de la description suivante d'un de ses modes de réalisation préférentiel donné à titre d'exemple non limitatif, et qui se réfère aux figures annexées dans lesquelles :
- les figures 1 et 2 sont des vues schématiques en coupe d'un support de données multicouche selon un premier mode de réalisation selon l'invention illustrant un procédé de fabrication d'un tel support de données,
- la figure 3 est une vue schématique d'un document officiel comprenant un support de données multicouche selon l'invention, l'image semi-transparente étant visible,
- la figure 4 est une vue schématique d'un document officiel comprenant un support de données multicouche selon l'invention, l'image semi-transparente n'étant pas visible,
- les figures 5 et 6 sont des vues schématiques en coupe d'un support de données multicouche selon un deuxième mode de réalisation de l'invention illustrant un procédé de fabrication d'un tel support de données.

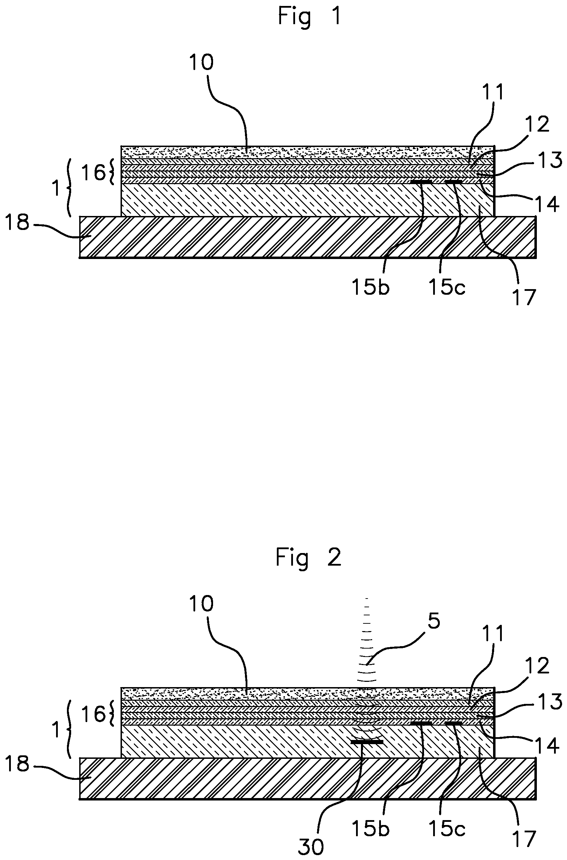

Sur les figures 1 à 6, les échelles ne sont pas respectées, à des fins d'illustration. En particulier, sur les figures 1, 2, 5 et 6, les épaisseurs sont exagérément agrandies.

On réalise un support 1 de données multicouche transparent incorporant une image semi-transparente polychromatique thermochromique. Le support 1 de données multicouche comprend au moins une couche 16 de sécurité transparente comprenant l'image semi-transparente et au moins une couche, dite couche 17 de marquage, sensible à un rayonnement 5 électromagnétique de marquage, ladite couche de marquage étant disposée au moins en partie en regard de ladite couche 16 de sécurité. Le support 1 de données multicouche est porté par un film support 18.

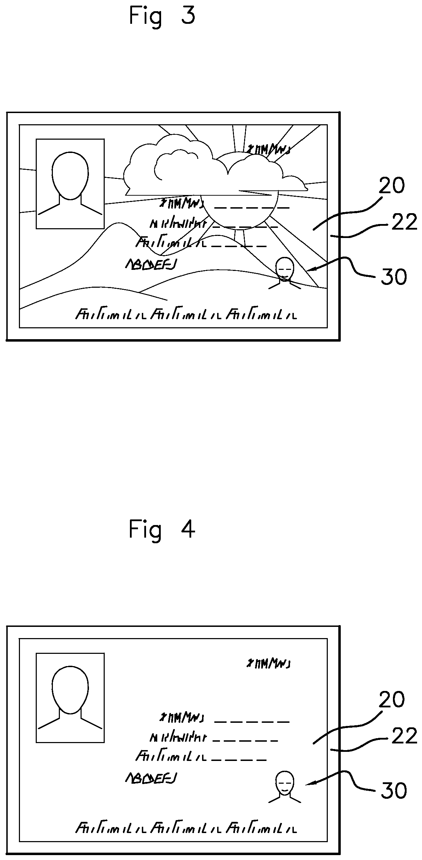

Ce support 1 de données multicouche transparent peut constituer un transfert à chaud, c'est-à-dire peut être utilisé pour être appliqué et transféré par lamination à chaud sur une portion de surface d'un document officiel 22, comme représenté sur les figures 2 et 3, notamment en vue de la protéger contre les falsifications et/ou pour authentifier le document officiel et/ou des inscriptions variables ou communes préalablement imprimées sur cette portion de surface et/ou pour garantir son intégrité.

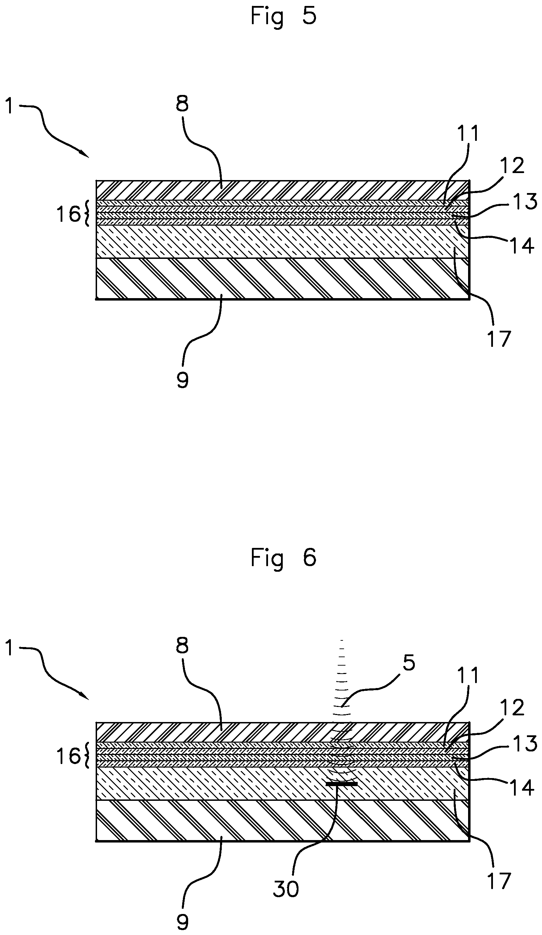

Dans une première étape d'un procédé de fabrication du support de données multicouche (figures 1 et 5) on prépare ladite image semi-transparente.

On prépare au moins une composition d'impression (ou encre thermochromique). Chaque composition d'impression comprend :
- entre 9 % et 22 % en poids de pigments (capsules) thermochromiques,
- entre 30 % et 45 % en poids d'au moins un liant transparent, tel qu'une résine thermoplastique, en particulier une résine thermoplastique acrylique,
- entre 25 % et 50 % en poids de solvant tel que l'éther de dipropylène glycol monométhylique ou le 3-éthoxypropanoate d'éthyle.

Les microcapsules thermochromiques comprennent au moins un leuco-colorant (également appelé « développeur de couleur »), au moins un acide faible et au moins un liquide organique (tel qu'un ester d'acide gras).

Les leuco-colorants sont des molécules qui peuvent prendre deux formes différentes : une forme colorée et une forme incolore.

Chaque encre thermochromique peut également comprendre tout type d'additif (en particulier moins de 5% en poids par rapport au poids total de l'encre thermochromique). On peut par exemple ajouter des additifs anti-UV tels que benzotriazole d'hydroxyphényle (BTZ) ou la 2-hydroxyphényl-s-triazine (HDT).

À partir d'une image ou photographie traitée en synthèse soustractive on obtient quatre films ou négatifs tramés correspondants aux quatre couleurs primaires (jaune, magenta, cyan, noir). La reproduction de l'image est effectuée en imprimant successivement les quatre filtres de l'image avec les couleurs primaires cyan, magenta, jaune et le noir.

Sur un support 1 de données multicouche sont imprimées successivement par exemple par sérigraphie les quatre images filtrées monochromatiques. Une couche séparative de vernis (non représentée) peut éventuellement être prévue entre chaque image filtrée monochromatique.

Dans un premier mode de réalisation illustré aux figures 1 et 2, le support 1 de données multicouche est porté par un film support 18 transparent formé par exemple en polystyrène.

Le support 1 de données multicouche peut être transparent ou semi-transparent. Il comprend une couche de marquage 17 formée par exemple d'une couche continue en polyuréthane comprenant des additifs permettant de la rendre sensible au marquage laser. L'ensemble formé par la couche de marquage 17 et le film support 18 transparent peut par exemple être un film de type Fasprotek™ ou Transfilm™ (FASVER, Baillargues, France) rendus sensibles au marquage laser à l'aide de noir de carbone, de Sn(Sb)O₂ ou de dioxyde de titane.

Alternativement, le support 1 de données multicouche peut également comprendre une couche 17 de marquage formée d'une couche unique (non supportée par un support) formée par exemple d'un film de type Fasfilm™ (FASVER, Baillargues, France). Dans ce cas, la couche continue est par exemple formée en polyéthylène téréphtalate ou en polycarbonate sensibles au rayonnement laser. La couche continue forme une couche 17 de marquage sensible à un rayonnement de marquage tel qu'un laser de marquage. En outre, dans ce dernier cas, la couche 10 d'adhésif n'est pas nécessaire pour permettre le transfert par laminage à chaud du support 1 de données multicouche sur une portion de surface d'un document officiel.

Chaque support 1 de données multicouche peut comprendre une unique couche de vernis séparable. Chaque support 1 de données multicouche peut incorporer des motifs 15b, 15c de sécurité imprimés sur et/ou sous la couche de vernis séparable par exemple. Ces motifs 15b, 15c de sécurité peuvent par exemple être formés de motifs visibles uniquement sous certaines conditions d'éclairage (WO 0024587, FR 2834484), de motifs dont l'aspect varie selon l'angle de visualisation, de motifs iridescents, de motifs à pigments interférentiels...

En quadrichromie on prépare ainsi quatre compositions thermochromiques. On imprime la première composition 14 thermochromique de couleur cyan en utilisant et en reproduisant respectivement l'image filtrée monochromatique (obtenue avec le filtre du cyan), de façon à former une première image monochromatique thermochromique semi-transparente. On imprime ensuite au-dessus la deuxième composition 13 thermochromique de couleur magenta en utilisant et en reproduisant respectivement l'image filtrée monochromatique (obtenue avec le filtre du magenta). On imprime ensuite au-dessus la troisième composition 12 thermochromique de couleur jaune en utilisant et en reproduisant respectivement l'image filtrée monochromatique (obtenue avec le filtre du jaune). On imprime ensuite au-dessus la quatrième composition 11 thermochromique de couleur noire en utilisant et en reproduisant respectivement l'image filtrée monochromatique (obtenue avec le filtre du noir). Un séchage peut être prévu entre l'impression de chaque composition thermochromique, à la température ambiante ou par exemple à l'aide d'un flux d'air chaud.

On imprime ensuite une couche 10 d'adhésif sur la dernière couche de l'image semi-transparente ainsi imprimée. Cette couche d'adhésif permet le transfert du support 1 de données multicouche et la fixation de celui-ci sur un document officiel.

On peut également ajouter un film protecteur (non représenté) sur la couche d'adhésif.

Dans un deuxième mode de réalisation selon l'invention représenté aux figures 5 et 6, le support 1 de données se présente sous la forme générale d'une feuille ou d'une carte et présente donc deux faces principales planes externes opposées, et une épaisseur relativement faible. Dans toute la suite, seule une face principale, dite face externe, est représentée et décrite et présente les caractéristiques de l'invention, étant entendu que l'autre face principale externe peut tout aussi bien présenter les mêmes caractéristiques, ou au contraire présenter d'autres caractéristiques. En conséquence, il est supposé dans toute la suite que la face opposée à la face externe considérée est une face principale externe d'un fond 9, sans que cela implique une quelconque limitation, un tel fond pouvant ne pas être présent et/ou étant constitué lui-même d'une couche ou d'une pluralité de couches plus ou moins épaisse(s) non décrite(s) dans la présente description.

En particulier le fond 9 peut être formé d'au moins une couche en matériau thermoplastique choisi parmi les polycarbonates, les PVC, les polyesters (polyéthylène téréphtalate PET, polyéthylène téréphtalate glycol PETG), les films co-extrudés de polyester et de polycarbonate (PEC), les papiers synthétiques (notamment choisis parmi les papiers fiduciaires et le papier commercialisé sous la marque Teslin® par la société PPG, Monroeville, USA, le papier commercialisé sous la marque Neobond® par la société Neenah Lahnstein, Lahnstein, Allemagne, et le papier commercialisé sous la marque Polyart® par la société Arjobex, Boulogne, France). D'autres exemples sont possibles.

Dans ce deuxième mode de réalisation d'un procédé de préparation et d'un support de données multicouche selon l'invention, on prépare ladite image semi-transparente comme dans le premier mode de réalisation décrit précédemment mais on l'imprime sur une feuille 8 formée par exemple en polycarbonate (transparent et non sensible au rayonnement laser). Une fois ladite image semi-transparente imprimée sur la feuille 8, on retourne ladite feuille et on la dépose sur un ensemble de feuilles comprenant au moins une couche 17 de marquage et un fond 9 blanc. Comme on peut le voir sur la figure 5, la face de la feuille 8 sur laquelle a été imprimée ladite image semi-transparente est disposée au contact de la couche 17 de marquage. La figure 5 montre le support de données obtenu après lamination à chaud sous pression de ces différentes couches.

Dans un troisième mode de réalisation d'un procédé de préparation et d'un support de données multicouche selon l'invention (non représenté), le support de données peut être similaire à celui du premier mode de réalisation mais dans lequel la disposition de la couche de sécurité 16 et la couche 17 de marquage est inversée, la couche 17 de marquage étant alors disposée au contact de l'adhésif 10. Dans ce mode de réalisation, la deuxième étape de marquage sera réalisée après transfert du support de données sur un autre document, par exemple une feuille de papier, le marquage à l'aide d'un rayonnement 5 laser de marquage étant réalisé au travers de ladite image semi-transparente de façon à produire une marque 30 au sein de la couche 17 de marquage.

Dans une deuxième étape d'un procédé de fabrication du support de données multicouche (figures 2 et 6), dans le premier mode de réalisation et dans le deuxième mode de réalisation, on réalise un marquage à l'aide d'un rayonnement 5 laser de marquage au travers de ladite image semi-transparente de façon à produire une marque 30 au sein de la couche 17 de marquage.

Dans le premier mode de réalisation, une couche de détachement peut éventuellement être prévue entre le support 1 de données multicouche transparent et le film support 18 transparent, de façon à faciliter l'enlèvement du film support 18 transparent, une fois le dispositif de protection transféré sur un substrat tel qu'un document officiel.

On obtient ainsi un support 1 de données multicouche transparent comprenant une image imprimée semi-transparente polychromatique et une marque 30 obtenue à l'aide d'un rayonnement laser (représenté en figure 2).

Ensuite, s'il est prévu, on retire le film protecteur et on applique le support 1 de données sur le document officiel. Le transfert peut être réalisé par lamination aux alentours de 100° C à 120° C pendant 5 secondes sur un document officiel 22.

Les figures 3 et 4 représentent un document officiel 22 (par exemple une carte d'identité) sur lequel on a transféré le support 1 de données tel que préparé précédemment aux figures 1 et 3.

Le document officiel 22 présente des inscriptions, notamment des mentions variables telles que des données identitaires. Les inscriptions figurant sur le document officiel 22 sont de préférence noires et en particulier de couleur (ou de nuance) différente des couleurs des motifs de l'image semi-transparent les recouvrant, de manière à ce qu'elle se distingue facilement à l'oeil nu (sous lumière visible).

Dans l'état non activé représenté en figure 3, l'image polychromatique semi-transparente est visible et permet la visualisation des inscriptions à travers cette image.

Après un léger chauffage au contact des doigts ou de la main, on passe à l'état activé représenté en figure 4, et l'image polychromatique semi-transparente n'est plus visible (incolore), la visualisation des inscriptions à travers cette image étant toujours possible.

La marque 30 est visible à l'état non activé et à l'état activé et n'est pas masqué par l'image polychromatique semi-transparente comme on peut le voir aux figures 3 et 4.

Il est à noter que dans l'exemple représenté schématiquement sur les figures 3 et 4, les motifs sont représentés avec des formes géométriques simples. Néanmoins, l'invention permet de réaliser des motifs de haute définition, avec des formes très complexes et très fines.

### EXEMPLE 1 :

On prépare quatre encres thermochromiques comprenant chacune :
- 14 à 20 % en poids de pigments (capsules) thermochromiques,
- 40 à 46 % en poids de copolymère de méthacrylate de méthyle à titre de liant transparent, et
- 26 % en poids d'éther de dipropylène glycol monométhylique,
- 10 % de 3-éthoxypropanoate d'éthyle,
- 4 % en poids de 2-hydroxyphényl-s-triazine (additif anti-UV).

Chaque encre thermochromique présente une viscosité de l'ordre de 7 Pa.s.

Les capsules thermochromiques de la première encre thermochromique, pour obtenir la couleur cyan, sont formées d'un mélange de capsules thermochromiques vertes et bleues dans une proportion d'environ 50% - 50%. Pour la couleur bleu, le leuco-colorant contenu dans les microcapsules est le « *Crystal Violet Lactone* » et pour la couleur verte le leuco-colorant contenu dans les microcapsules est le 3-diethylamino-7-dibenzylaminofluoran. La première encre thermochromique comprend au total 20% en poids de capsules thermochromiques.

Les capsules thermochromiques de la deuxième encre thermochromique pour obtenir la couleur magenta, sont formées d'un mélange de capsules thermochromiques rouges et bleues dans une proportion d'environ 50% - 50%. La deuxième encre thermochromique comprend au total 16% en poids de capsules thermochromiques.

Les capsules thermochromiques de la troisième encre thermochromique sont des capsules thermochromiques de couleur jaune. La troisième encre thermochromique comprend 20% en poids de capsules thermochromiques.

Les capsules thermochromiques de la quatrième encre thermochromique sont des capsules thermochromiques noires. La quatrième encre thermochromique comprend 14% en poids de capsules thermochromiques.

Ces capsules thermochromiques sont commercialisées par la société Gem'innov® (Gémenos, France) et activables à la température d'activation de +30°C. Les capsules thermochromiques présentent une taille moyenne de 10 µm. Le liquide organique contenu dans les capsules thermochromiques est un ester d'acide gras.

À partir d'une image ou photographie traitée en synthèse soustractive on obtient quatre films ou négatifs tramés correspondants aux quatre couleurs primaires (jaune, magenta, cyan, noir). La reproduction de l'image est effectuée en imprimant successivement les quatre filtres de l'image avec les quatre couleurs primaires cyan, magenta, jaune et noir.

On imprime successivement par sérigraphie les quatre images filtrées monochromatiques sur la face libre d'un support de données multicouche transparent porté par un film support (film commercialisé sous la marque FASPROTEK® par la société Fasver (Baillargues, France) comprenant au moins une couche de marquage rendue sensible au marquage laser à l'aide de noir de carbone, de Sn(Sb)O₂ ou de dioxyde de titane. Chaque écran sérigraphique est réalisé à partir d'un tissu dont la maille comprend de l'ordre de 150 fils/cm, chaque fil présentant un diamètre de 31 µm.

On imprime en miroir l'une après l'autre la première encre thermochromique de couleur cyan, la deuxième encre thermochromique de couleur magenta, la troisième encre thermochromique de couleur jaune et la quatrième encre thermochromique noire en utilisant et en reproduisant respectivement l'image filtrée monochromatique obtenue avec chaque filtre. Après l'impression de chaque encre thermochromique on la sèche à l'aide d'un flux continu d'air à 70°C pendant 1min50s. On imprime ensuite une couche d'adhésif sur la quatrième encre thermochromique noire.

On applique ensuite le support de données multicouche transparent sur un document officiel (page de passeport) par laminage à chaud.

Après laminage à chaud, on réalise un marquage à l'aide d'un rayonnement laser de marquage infrarouge au travers de ladite image semi-transparente de façon à produire une marque laser au sein de la couche de marquage disposée entre l'image semi-transparente et le film support dudit support de données.

Un laser de marquage (Nd :YAG - 1064 nm) du type DPSS (« *Diode Pulsed Solid State* ») commercialisé par la société IXLA sous la référence XP24® (modèle de bureau) est utilisé avec des réglages standards (vitesse : 1000 mm/s ; fréquence : 20 kHz) en vue de réaliser une photo d'un visage féminin en binaire, noire et blanche (ou « *bitmap* »). Le rayonnement laser est sensiblement perpendiculaire à la surface externe du support de données et est disposé du côté du support de données où se trouve l'image semi-transparente thermochromique, du côté opposé au film support. La couche de sécurité comprenant l'image imprimée semi-transparente est traversée par le rayonnement laser infrarouge est permet la réalisation d'une marque laser dans la couche de marquage sous-jacente.

On obtient ainsi un support de données multicouche transparent comprenant une image imprimée semi-transparente et une marque obtenue par marquage laser disposée sous ladite image imprimée semi-transparente, ladite image imprimée semi-transparente permettant de visualiser la marque obtenue par gravure laser (à l'état activé comme à l'état non activé des pigments thermochromiques).

L'image semi-transparente ainsi disposée sur le document officiel est polychromatique à la température ambiante (de l'ordre de 18 à 25 °C) ce qui n'empêche pas la lecture des inscriptions figurant sur le document officiel, et devient invisible (car incolore) à partir de 30°C, lorsqu'on touche l'image semi-transparente avec les doigts ou la main par exemple. L'image redevient ensuite spontanément polychromatique en quelques secondes.

En outre, avec le support de données multicouche de l'exemple mentionné ci-dessus appliqué sur un document officiel on réalise les tests de tenue à la lumière suivants :
- résistance à la lumière artificielle mesurée selon les normes ISO 24789-1 et ISO 24789-2 : on soumet les échantillons au rayonnement d'une lampe à arc au xénon pendant 24 heures en présence du filtre de lumière et la température du panneau noir étant de 50°C;
- résistance à la lumière artificielle mesurée selon la méthode définie par l'organisation internationale de l'aviation civile (« *ICAO* ») concernant la durabilité des passeports (version: 3.2 datée du 30 août 2006, paragraphe 5.14) : on soumet les échantillons au rayonnement d'une lampe à arc au xénon refroidie à l'air en présence d'un filtre des rayonnements de longueurs d'onde inférieures à 310 nm ;
- résistance aux ultraviolets A mesurée selon les normes ISO 4582 et DIN 6167 : on place les échantillons 20 heures à 60°C et à 0,72 W.m-2.nm-1.

Après chaque test, on relève l'écart de couleur (avant et après le test) à l'état non activé coloré du dispositif de protection. L'écart de couleur est mesuré selon la norme ISO 7724-3 à l'aide d'un spectro-colorimètre DR LANGE® (Düsseldorf, Allemagne). Les écarts de couleur (delta E) ainsi mesurés dans chacun des tests de tenue à la lumière précédents sont tous inférieurs à 5, c'est-à-dire inférieurs au seuil pour lequel l'oeil humain perçoit une différence de couleur.

De même, concernant la tenue climatique du support de données multicouche de l'exemple mentionné ci-dessus appliqué sur un document officiel on réalise les tests suivants :
- résistance climatique mesurée selon les normes NF T 76-109 et DIN 6167 : on soumet les échantillons à 7 cycles de vieillissement climatique de 12 heures chacun (soit 84 heures au total) dans les conditions suivantes: 70°C pendant 5 heures, refroidissement jusqu'à -40°C en 1 heure, -40°C pendant 5 heures puis montée en température jusqu'à 70°C, taux d'humidité relative de 90 % ;
- résistance climatique mesurée selon la méthode définie par l'organisation internationale de l'aviation civile (« *ICAO* ») concernant la durabilité des passeports (version: 3.2 datée du 30 août 2006, paragraphe 5.2) : on soumet les échantillons à 7 cycles de vieillissement climatique dans les conditions suivantes : 77°C pendant 15 minutes, passage en moins de 60 secondes à -32°C et maintien à -32°C pendant 15 minutes ;
- résistance climatique mesurée selon la méthode définie par l'organisation internationale de l'aviation civile (« *ICAO* ») concernant la durabilité des passeports (version: 3.2 datée du 30 août 2006, paragraphe 5.3) : on soumet les échantillons une température de 77°C pendant 168 heures en présence d'un taux d'humidité relative de 50 %;
- résistance climatique mesurée selon les normes ISO 24789-1 et ISO 24789-2, paragraphe 5.7 (50°C ; taux d'humidité relative de 93 %), paragraphe 5.8 (-35°C pendant 15 min, passage en moins de 15 s à 50°C et maintien à 50°C pendant 15 min) et paragraphe 5.9 (-35°C pendant 30 min, +50°C et 20% d'humidité relative pendant 6,5h, -35°C pendant 30min, puis, +50°C et 85% d'humidité relative pendant 6,5h).

Après chaque test de tenue climatique, on relève l'écart de couleur (avant et après le test) à l'état non activé coloré du support de données multicouche. L'écart de couleur est mesuré selon la norme ISO 7724-3 à l'aide d'un spectro-colorimètre DR LANGE® (Düsseldorf, Allemagne). Les écarts de couleur (delta E) ainsi mesurés dans chacun des tests de tenue à la lumière précédents sont tous inférieurs à 5, c'est-à-dire inférieurs au seuil pour lequel l'oeil humain perçoit une différence de couleur. Les propriétés thermochromiques du support de données multicouche n'ont pas été affectées.

### EXEMPLE 2 :

Dans cet exemple on réalise des images semi-transparentes polychromatiques appliquées sur un document officiel portant des inscriptions comme indiqué à l'exemple 1, mais en faisant varier le taux de pigments dans chacune des quatre encres thermochromiques. On constate qu'en dessous d'un certain taux de pigments l'image semi transparente thermochromique n'est plus visible. Au-dessus d'un certain taux de pigments l'image semi transparente thermochromique empêche la visualisation des inscriptions figurant sur le document officiel.

Le tableau ci-dessous décrit les résultats obtenus.

| Proportion de pigment thermochromique (%) | Proportion de liant (%) | Proportion de solvant (%) | Proportion d'additif (%) | Aspect visuel |
|---|---|---|---|---|
| 27 | 36,5 | 33,5 | 3 | inscriptions sous-jacentes non visibles |
| 20 | 40 | 36 | 4 | inscriptions sous-jacentes visibles - Exemple 1 |
| 14,9 | 42,5 | 39,1 | 3,4 | inscriptions sous-jacentes visibles |
| 9,5 | 45,2 | 41,7 | 3,6 | inscriptions sous-jacentes visibles |
| 6,5 | 46,7 | 43,1 | 3,7 | image semi-transparente thermochromique non visible |

### EXEMPLE 3 :

Un film de polycarbonate (non sensible au rayonnement laser) contenant une couche thermochromique de couleur bleue et de température d'activation de 36°C est disposé sur un film sensible au marquage laser commercialisé par BAYER MATERIALS SCIENCE sous la référence MAKROFOL ID ® (comprenant du noir de carbone).

On prépare une encre thermochromique comprenant :
- 10 % en poids de pigments (capsules) thermochromiques,
- 46 % en poids de copolymère de méthacrylate de méthyle à titre de liant transparent, et
- 29 % en poids d'éther de dipropylène glycol monométhylique,
- 11 % de 3-éthoxypropanoate d'éthyle,
- 4 % en poids de 2-hydroxyphényl-s-triazine (additif anti-UV).

L'encre thermochromique présente une viscosité de l'ordre de 7 Pa.s.

Le leuco-colorant contenu dans les microcapsules thermochromiques est le « *Crystal Violet Lactone* ». Ces capsules thermochromiques sont commercialisées par la société Gem'innov® (Gémenos, France). Les capsules thermochromiques présentent une taille moyenne de 10 µm. Le liquide organique contenu dans les capsules thermochromiques est un ester d'acide gras.

La couche thermochromique comprend donc une image thermochromique semi-transparente en-dessous de la température d'activation et transparente au-delà de la température d'activation.

Le film de polycarbonate (non sensible au laser) contenant l'image thermochromique semi-transparente disposé sur un film comprenant une couche de marquage laser est laminé à chaud et sous pression avec d'autres couches en polycarbonate.

Un laser de marquage (Nd :YAG - 1064 nm) du type DPSS (« *Diode Pulsed Solid State* ») commercialisé par la société IXLA sous la référence XP24® (modèle de bureau) est utilisé avec des réglages standards (vitesse : 1000mm/s ; fréquence : 20kHz) pour réaliser une photo d'un visage féminin en binaire, noire et blanche (ou « *bitmap* ») au travers de l'image thermochromique semi-transparente et au sein de la couche de marquage laser.

On obtient un support de données multicouche transparent comprenant une image imprimée semi-transparente bleue et une marque noire représentant un visage obtenue par marquage laser disposée sous ladite image imprimée semi-transparente, ladite image imprimée semi-transparente permettant de visualiser la marque obtenue par gravure laser (à l'état activé comme à l'état non activé des pigments thermochromiques).

### EXEMPLE 4 :

On réalise un support de données multicouche conformément à l'exemple 3 en remplaçant les capsules thermochromiques bleues par des capsules thermochromiques de couleur rose commercialisées par la société Gem'innov® (Gémenos, France). L'encre thermochromique comprend 20 % en poids de capsules thermochromiques de couleur rose.

On obtient un support de données multicouche transparent comprenant une image imprimée semi-transparente rose et une marque noire représentant un visage obtenue par marquage laser disposée sous ladite image imprimée semi-transparente, ladite image imprimée semi-transparente permettant de visualiser la marque obtenue par gravure laser (à l'état activé comme à l'état non activé des pigments thermochromiques).

### EXEMPLE 5 :

On réalise un support de données multicouche conformément à l'exemple 3 en remplaçant les capsules thermochromiques bleues par des capsules thermochromiques de couleur rouge commercialisées par la société Gem'innov® (Gémenos, France). L'encre thermochromique comprend 16 % en poids de capsules thermochromiques de couleur rouge.

On obtient un support de données multicouche transparent comprenant une image imprimée semi-transparente rouge et une marque noire représentant un visage obtenue par marquage laser disposée sous ladite image imprimée semi-transparente, ladite image imprimée semi-transparente permettant de visualiser la marque obtenue par gravure laser (à l'état activé comme à l'état non activé des pigments thermochromiques).

### EXEMPLE 6 :

On réalise un support de données multicouche conformément à l'exemple 3 en utilisant un laser de marquage ultraviolet à la place d'un laser infrarouge.

Un laser de marquage UV (Nd :YVO4 - 355 nm) du type DPSS (« *Diode Pulsed Solid State* ») commercialisé par la société TRUMPH sous la référence TRUMARK 6330® est utilisé avec des réglages standards (vitesse : 1000mm/s ; fréquence : 20kHz) pour réaliser une photo d'un visage féminin en binaire, noire et blanche (ou « *bitmap* ») au travers de l'image thermochromique semi-transparente.

On obtient un support de données multicouche transparent comprenant une image imprimée semi-transparente bleue et une marque noire représentant un visage obtenue par marquage laser disposée sous ladite image imprimée semi-transparente, ladite image imprimée semi-transparente permettant de visualiser la marque obtenue par gravure laser (à l'état activé comme à l'état non activé des pigments thermochromiques).

L'ensemble de ces exemples montrent qu'il est possible de réaliser un marquage laser avec une longueur d'onde allant de la plage spectrale des ultraviolets à la plage spectrale des infrarouges, au travers d'une image semi-transparente selon l'invention.

L'invention peut faire l'objet de très nombreuses variantes de réalisation. En particulier, l'image imprimée semi-transparente thermochromique peut être formée sur une face d'une couche transparente du document officiel lui-même, le support de données multicouche selon l'invention étant formé de cette couche transparente portant cette image imprimée semi-transparente thermochromique et d'une couche de marquage selon l'invention.

## Revendications

1. Procédé de fabrication d'un support (1) de données multicouche dans lequel :
- on choisit un support de données multicouche comprenant au moins une couche (16) de sécurité et au moins une couche, dite couche (17) de marquage, sensible à un rayonnement (5) électromagnétique de marquage, ladite couche de marquage étant disposée au moins en partie en regard de ladite couche (16) de sécurité,
- ladite couche (16) de sécurité comprend au moins une image imprimée comprenant au moins un pigment thermochromique adapté pour changer de couleur lors d'une variation prédéterminée de température,
- dans une étape de marquage, on réalise, dans ladite couche (17) de marquage, au moins une marque (30) à l'aide dudit rayonnement (5) électromagnétique
de marquage, au travers de ladite image imprimée,
**caractérisé en ce que** :
- ladite image imprimée est une image imprimée semi-transparente faisant apparaitre dans un premier état, dit état non activé, à au moins une première température, au moins un motif visible semi-transparent permettant, après ladite étape de marquage, la visualisation de ladite marque (30) à travers cette image, ledit motif n'étant pas visible dans un second état, dit état activé, à au moins une deuxième température différente de la première température,
- on prépare ladite image imprimée à partir d'au moins une composition d'impression comprenant au moins un liant transparent et une proportion prédéterminée de pigments thermochromiques adaptée pour former une image imprimée semi-transparente permettant la visualisation de ladite marque à travers cette image à l'état non activé des pigments thermochromiques.

2. Procédé selon la revendication 1, **caractérisé en ce que** ledit rayonnement électromagnétique de marquage est un rayonnement laser.

3. Procédé selon l'une des revendications 1 ou 2, **caractérisé en ce que** ladite image semi-transparente est une image colorée, et en particulier une image polychromatique.

4. Procédé selon l'une des revendications 1 à 3, **caractérisé en ce que** ladite image semi-transparente est imprimée selon la technique de la quadrichromie.

5. Procédé selon l'une des revendications 1 à 4, **caractérisé en ce que** ladite image semi-transparente est imprimée avec une linéature supérieure à 80 lignes par pouces.

6. Procédé selon l'une des revendications 1 à 5, **caractérisé en ce qu'**on choisit ledit liant transparent dans le groupe formé des liants polymériques transparents.

7. Procédé selon l'une des revendications 1 à 6, **caractérisé en ce que** ladite image semi-transparente est imprimée à l'aide d'au moins une composition d'impression comprenant au moins un pigment thermochromique choisi dans le groupe formé des capsules comprenant au moins un leuco-colorant, au moins un acide faible et au moins un solvant.

8. Procédé selon l'une des revendications 1 à 7, **caractérisé en ce que** ladite image semi-transparente est imprimée à l'aide d'au moins une composition d'impression comprenant entre 9 % et 22 % en poids de pigments thermochromiques.

9. Procédé selon l'une des revendications 1 à 8, **caractérisé en ce que** ladite image semi-transparente est imprimée par impressions successives :
- d'une première composition d'impression comprenant au moins un pigment thermochromique de couleur cyan,
- d'une deuxième composition d'impression comprenant au moins un pigment thermochromique de couleur magenta,
- d'une troisième composition d'impression comprenant au moins un pigment thermochromique de couleur jaune, et
- d'une quatrième composition d'impression comprenant au moins un pigment thermochromique de couleur noire.

10. Procédé selon l'une des revendications 1 à 9, **caractérisé en ce qu'**on utilise une couche de sécurité comprenant au moins une couche formée d'au moins un matériau choisi dans le groupe formé des matériaux thermoplastiques transparents et des papiers synthétiques transparents.

11. Procédé selon l'une des revendications 1 à 10, **caractérisé en ce qu'**on utilise une couche de sécurité comprenant au moins une couche formée d'au moins un matériau choisi dans le groupe formé des polycarbonates transparents, des polyesters transparents, du PVC transparent, des vernis en polyuréthane et des vernis vinyliques.

12. Support (1) de données multicouche comprenant :
- au moins une couche (16) de sécurité comprenant au moins une image imprimée comprenant au moins un pigment thermochromique adapté pour changer de couleur lors d'une variation prédéterminée de température,
- au moins une couche, dite couche (17) de marquage, sensible à un rayonnement (5) électromagnétique de marquage comprenant au moins une marque (30) effectuée à l'aide dudit rayonnement (5) électromagnétique de marquage, ladite couche de marquage étant disposée au moins en partie en regard de ladite couche (16) de sécurité, **caractérisé en ce que** :
- ladite image imprimée est une image imprimée semi-transparente faisant apparaitre dans un premier état, dit état non activé, à au moins une première température, au moins un motif visible semi-transparent permettant la visualisation de ladite marque (30) effectuée à l'aide du rayonnement (5) électromagnétique de marquage, ledit motif n'étant pas visible dans un second état, dit état activé, à au moins une deuxième température différente de la première température,
- ladite image imprimée est préparée à partir d'au moins une composition d'impression comprenant au moins un liant transparent et une proportion prédéterminée de pigments thermochromiques adaptée pour former une image imprimée semi-transparente permettant la visualisation de ladite marque à travers cette image à l'état non activé des pigments thermochromiques.

13. Support selon la revendication 12, **caractérisé en ce que** ladite image semi-transparente est une image polychromatique.

14. Support selon l'une des revendications 12 ou 13, **caractérisé en ce que** ladite image semi-transparente est disposée au moins pour partie en regard de ladite couche (17) de marquage.

15. Support selon l'une des revendications 12 à 14, **caractérisé en ce que** ladite image semi-transparente s'étend selon un format similaire à celui de la couche (16) de sécurité transparente.

16. Support selon l'une des revendications 12 à 15, **caractérisé en ce qu'**il est porté par un film (18) support disposé sur au moins une portion de la surface d'une couche extérieure dudit support de données multicouche.

17. Document officiel comprenant au moins un support de données multicouche selon l'une des revendications 12 à 16.

## Patentansprüche

1. Verfahren zur Herstellung eines mehrschichtigen Datenträgers (1), bei dem:
- man einen mehrschichtigen Datenträger wählt, der mindestens eine Sicherheitsschicht (16) und mindestens eine Kennzeichnungsschicht (17) genannte Schicht umfasst, die empfindlich für eine elektromagnetische Kennzeichnungsstrahlung (5) ist, wobei die Kennzeichnungsschicht zumindest teilweise der Sicherheitsschicht (16) zugewandt angeordnet ist,
- die Sicherheitsschicht (16) mindestens ein gedrucktes Bild umfasst, das mindestens ein thermochromes Pigment umfasst, das geeignet ist, bei einer vorbestimmten Temperaturänderung die Farbe zu wechseln,
- man in einem Kennzeichnungsschritt in der Kennzeichnungsschicht (17) mindestens ein Kennzeichen (30) mithilfe der elektromagnetischen Kennzeichnungsstrahlung (5) durch das gedruckte Bild hindurch ausführt,
**dadurch gekennzeichnet, dass**:
- das gedruckte Bild ein halbtransparentes gedrucktes Bild ist, das in einem ersten Zustand, nicht aktivierter Zustand genannt, bei mindestens einer ersten Temperatur mindestens ein halbtransparentes sichtbares Muster erscheinen lässt, das, nach dem Kennzeichnungsschritt, das Betrachten des Kennzeichens (30) durch dieses Bild hindurch ermöglicht, wobei das Muster in einem zweiten Zustand, aktivierter Zustand genannt, bei mindestens einer zweiten Temperatur, die von der ersten Temperatur verschieden ist, nicht sichtbar ist,
- man das gedruckte Bild aus mindestens einer Druckzusammensetzung bereitet, die mindestens ein transparentes Bindemittel und einen vorbestimmten Anteil an thermochromen Pigmenten umfasst, der geeignet ist, ein halbtransparentes gedrucktes Bild zu bilden, das im nicht aktivierten Zustand der thermochromen Pigmente das Betrachten des Kennzeichens durch dieses Bild hindurch ermöglicht.

2. Verfahren nach Anspruch 1, **dadurch gekennzeichnet, dass** die elektromagnetische Kennzeichnungsstrahlung eine Laserstrahlung ist.

3. Verfahren nach einem der Ansprüche 1 oder 2, **dadurch gekennzeichnet, dass** das halbtransparente Bild ein farbiges Bild und insbesondere ein polychromatisches Bild ist.

4. Verfahren nach einem der Ansprüche 1 bis 3, **dadurch gekennzeichnet, dass** das halbtransparente Bild nach dem Technik des Vierfarbendrucks gedruckt ist.

5. Verfahren nach einem der Ansprüche 1 bis 4, **dadurch gekennzeichnet, dass** das halbtransparente Bild mit einer Lineatur von mehr als 80 Linien pro Zoll gedruckt ist.

6. Verfahren nach einem der Ansprüche 1 bis 5, **dadurch gekennzeichnet, dass** man das transparente Bindemittel aus der Gruppe wählt, die aus transparenten polymerischen Bindemitteln gebildet wird.

7. Verfahren nach einem der Ansprüche 1 bis 6, **dadurch gekennzeichnet, dass** das halbtransparente Bild mithilfe mindestens einer Druckzusammensetzung gedruckt ist, die mindestens ein thermochromes Pigment umfasst, das aus der Gruppe gewählt ist, die aus Kapseln gebildet wird, die mindestens einen Leukofarbstoff, mindestens eine schwache Säure und mindestens ein Lösungsmittel umfassen.

8. Verfahren nach einem der Ansprüche 1 bis 7, **dadurch gekennzeichnet, dass** das halbtransparente Bild mithilfe mindestens einer Druckzusammensetzung gedruckt ist, die zwischen 9 % und 22 % des Gewichts thermochrome Partikel umfasst.

9. Verfahren nach einem der Ansprüche 1 bis 8, **dadurch gekennzeichnet, dass** das halbtransparente Bild durch aufeinanderfolgende Drucke gedruckt ist:
- mit einer ersten Druckzusammensetzung, die mindestens ein cyanfarbenes thermochromes Pigment umfasst,
- mit einer zweiten Druckzusammensetzung, die mindestens ein magentafarbenes thermochromes Pigment umfasst,
- mit einer dritten Druckzusammensetzung, die mindestens ein gelbfarbenes thermochromes Pigment umfasst und
- mit einer vierten Druckzusammensetzung, die mindestens ein schwarzefarbenes thermochromes Pigment umfasst.

10. Verfahren nach einem der Ansprüche 1 bis 9, **dadurch gekennzeichnet, dass** man eine Sicherheitsschicht verwendet, die mindestens eine Schicht umfasst, die aus mindestens einem Material gebildet wird, das aus der Gruppe gewählt ist, die aus transparenten thermoplastischen Materialien und transparenten synthetischen Papieren gebildet wird.

11. Verfahren nach einem der Ansprüche 1 bis 10, **dadurch gekennzeichnet, dass** man eine Sicherheitsschicht verwendet, die mindestens eine Schicht umfasst, die aus mindestens einem Material gebildet wird, das aus der Gruppe gewählt ist, die aus transparenten Polycarbonaten, transparenten Polyestern, transparenten PVC, Polyurethanlacken und Vinyllacken gebildet wird.

12. Mehrschichtiger Datenträger (1), umfassend:
- mindestens eine Sicherheitsschicht (16), die mindestens ein gedrucktes Bild umfasst, das mindestens ein thermochromes Pigment umfasst, das geeignet ist, bei einer vorbestimmten Temperaturänderung die Farbe zu wechseln,
- mindestens eine Schicht, Kennzeichnungsschicht (17) genannt, die für eine elektromagnetische Kennzeichnungsstrahlung (5) empfindlich ist, umfassend mindestens ein Kennzeichen (30), das mithilfe der elektromagnetischen Kennzeichnungsstrahlung (5) ausgeführt ist, wobei die Kennzeichnungsschicht mindestens teilweise der Sicherheitsschicht (16) zugewandt angeordnet ist,
**dadurch gekennzeichnet, dass**:
- das gedruckte Bild ein halbtransparentes gedrucktes Bild ist, das in einem ersten Zustand, nicht aktivierter Zustand genannt, bei mindestens einer ersten Temperatur mindestens ein halbtransparentes sichtbares Muster erscheinen lässt, welches das Betrachten des Kennzeichens (30) ermöglicht, das mithilfe der elektromagnetischen Kennzeichnungsstrahlung (5) ausgeführt ist, wobei das Muster in einem zweiten Zustand, aktivierter Zustand genannt, bei mindestens einer zweiten Temperatur, die von der ersten Temperatur verschieden ist, nicht sichtbar ist,
- das gedruckte Bild aus mindestens einer Druckzusammensetzung bereitet wird, die mindestens ein transparentes Bindemittel und einen vorbestimmten Anteil an thermochromen Pigmenten umfasst, der geeignet ist, ein halbtransparentes gedrucktes Bild zu bilden, das in dem nicht aktivierten Zustand der thermochromen Pigmente das Betrachten des Kennzeichens durch dieses Bild hindurch ermöglicht.

13. Träger nach Anspruch 12, **dadurch gekennzeichnet, dass** das halbtransparente Bild ein polychromatisches Bild ist.

14. Träger nach einem der Ansprüche 12 oder 13, **dadurch gekennzeichnet, dass** das halbtransparente Bild zumindest teilweise der Kennzeichnungsschicht (17) zugewandt angeordnet ist.

15. Träger nach einem der Ansprüche 12 bis 14, **dadurch gekennzeichnet, dass** sich das halbtransparente Bild gemäß einem ähnlichen Format wie dem der transparenten Sicherheitsschicht (16) erstreckt.

16. Träger nach einem der Ansprüche 12 bis 15, **dadurch gekennzeichnet, dass** es von einer Trägerfolie (18) getragen wird, die auf mindestens einem Abschnitt der Oberfläche einer äußeren Schicht des mehrschichtigen Datenträgers angeordnet ist.

17. Amtliches Dokument, umfassend mindestens einen mehrschichtigen Datenträger nach einem der Ansprüche 12 bis 16.

## Claims

1. Method for manufacturing a multilayer data medium (1) in which:
- a multilayer data medium is selected comprising at least one security layer (16) and at least one layer, referred to as a marking layer (17), which is sensitive to electromagnetic marking radiation (5), said marking layer being positioned at least in part facing said security layer (16),
- said security layer (16) comprises at least one printed image comprising at least one thermochromic pigment adapted to change colour during a predetermined temperature variation,
- in a marking step, at least one mark (30) is produced in said marking layer (17) using said electromagnetic marking radiation (5) through said printed image,
**characterized in that**:
- said printed image is a semi-transparent printed image revealing, in a first state, referred to as a non-activated state, at at least a first temperature, at least one semi-transparent visible pattern that enables, after said marking step, said mark (30) to be seen through this image, said pattern not being visible in a second state, referred to as an activated state, at at least a second temperature different from the first temperature,
- said printed image is prepared from at least one printing composition comprising at least one transparent binder and a predetermined proportion of thermochromic pigments which is adapted to form a semi-transparent printed image that enables said mark to be seen through this image in the non-activated state of the thermochromic pigments.

2. Method according to Claim 1, **characterized in that** said electromagnetic marking radiation is a laser radiation.

3. Method according to either of Claims 1 and 2, **characterized in that** said semi-transparent image is a coloured image, and in particular a polychromatic image.

4. Method according to one of Claims 1 to 3, **characterized in that** said semi-transparent image is printed according to the four-colour printing technique.

5. Method according to one of Claims 1 to 4, **characterized in that** said semi-transparent image is printed with a number of lines greater than 80 lines per inch.

6. Method according to one of Claims 1 to 5, **characterized in that** said transparent binder is selected from the group formed of transparent polymeric binders.

7. Method according to one of Claims 1 to 6, **characterized in that** said semi-transparent image is printed using at least one printing composition comprising at least one thermochromic pigment selected from the group formed of capsules comprising at least one leuco dye, at least one weak acid and at least one solvent.

8. Method according to one of Claims 1 to 7, **characterized in that** said semi-transparent image is printed using at least one printing composition comprising between 9% and 22% by weight of thermochromic pigments.

9. Method according to one of Claims 1 to 8, **characterized in that** said semi-transparent image is printed by successive printings:
- of a first printing composition comprising at least one cyan-coloured thermochromic pigment,
- of a second printing composition comprising at least one magenta-coloured thermochromic pigment,
- of a third printing composition comprising at least one yellow-coloured thermochromic pigment, and
- of a fourth printing composition comprising at least one black-coloured thermochromic pigment.

10. Method according to one of Claims 1 to 9, **characterized in that** a security layer is used that comprises at least one layer formed of at least one material selected from the group formed of transparent thermoplastic materials and transparent synthetic papers.

11. Method according to one of Claims 1 to 10, **characterized in that** a security layer is used that comprises at least one layer formed of at least one material selected from the group formed of transparent polycarbonates, transparent polyesters, transparent PVC, polyurethane varnishes and vinyl varnishes.

12. Multilayer data medium (1) comprising:
- at least one security layer (16) comprising at least one printed image comprising at least one thermochromic pigment adapted to change colour during a predetermined temperature variation,
- at least one layer, referred to as a marking layer (17), which is sensitive to electromagnetic marking radiation (5) comprising at least one mark (30) made using said electromagnetic marking radiation (5), said marking layer being positioned at least in part facing said security layer (16),
**characterized in that**:
- said printed image is a semi-transparent printed image revealing, in a first state, referred to as a non-activated state, at at least a first temperature, at least one semi-transparent visible pattern that enables said mark (30) made using the electromagnetic marking radiation (5) to be seen, said pattern not being visible in a second state, referred to as an activated state, at at least a second temperature different from the first temperature,
- said printed image is prepared from at least one printing composition comprising at least one transparent binder and a predetermined proportion of thermochromic pigments adapted to form a semi-transparent printed image that enables said mark to be seen through this image in the non-activated state of the thermochromic pigments.

13. Medium according to Claim 12, **characterized in that** said semi-transparent image is a polychromatic image.

14. Medium according to either of Claims 12 and 13, **characterized in that** said semi-transparent image is positioned at least in part facing said marking layer (17) .

15. Medium according to one of Claims 12 to 14, **characterized in that** said semi-transparent image extends in a format similar to that of the transparent security layer (16).

16. Medium according to one of Claims 12 to 15, **characterized in that** it is borne by a backing film (18) positioned on at least one portion of the surface of an outer layer of said multilayer data medium.

17. Official document comprising at least one multilayer data medium according to one of Claims 12 to 16.
